# FASCICULE DE BREVET EUROPEEN

(11) **EP 2 895 654 B1**
(45) Date de publication et mention de la délivrance du brevet: **31.08.2016**
(21) Numéro de dépôt: 13765377.0
(22) Date de dépôt: 06.09.2013
(51) Int. Cl.: D21H 27/38, B32B 29/00, D21D 5/02, D21H 11/00, D21H 15/02

(54) **PROCEDE DE FABRICATION D'UN SUPPORT FIBREUX MULTICOUCHE PAR FRACTIONNEMENT ET STRATIFICATION**
VERFAHREN ZUR HERSTELLUNG EINES MEHRSCHICHTIGEN FASERSTOFFTRÄGERS DURCH FRAKTIONIERUNG UND STRATIFIZIERUNG
METHOD FOR PRODUCING A MULTI-LAYER FIBROUS SUPPORT BY FRACTIONATION AND STRATIFICATION

(30) Priorité: 11.09.2012 FR 1258498
(43) Date de publication de la demande: 22.07.2015
(73) Titulaire: Centre Technique de l'Industrie des Papiers, Cartons et Celluloses, 38400 Sait-Martin d'Heres (FR)
(72) Inventeur: CARRE, Bruno, F-38190 La Combe de Lancey (FR); KUMAR, Saurabh, F-38400 Saint Martin d'Heres (FR); JULIEN SAINT AMAND, François, F-38660 Le Touvet (FR); FABRY, Benjamin, F-38000 Grenoble (FR); HUBER, Patrick, F-38570 Le Cheylas (FR)
(74) Mandataire: Cabinet Laurent & Charras
(86) Numéro de dépôt international: PCT/FR2013/052058
(87) Numéro de publication internationale: WO 2014/041286

(56) Documents cités:
- WO-A1-02/33165
- WO-A1-2008/031921
- WO-A1-2009/077001
- US-B1- 6 413 363

## Description

### DOMAINE DE L'INVENTION

L'invention concerne un procédé de fabrication d'un support fibreux multicouche obtenu par fractionnement et stratification des fractions d'une pâte papetière. Elle s'inscrit dans le cadre de la fabrication du papier.

### ETAT ANTERIEUR DE LA TECHNIQUE

La fabrication de papier ou de carton est généralement réalisée à partir de pâte à papier essentiellement constituée d'une suspension cellulosique à base de différents types de fibres et de fines (éléments fins).

Dans la pratique, lors des étapes successives du procédé de fabrication, la pâte à papier est généralement traitée dans son intégralité dans des conditions identiques. Les fibres et les fines sont traitées en mélange de manière unitaire, et ce même si elles présentent des propriétés distinctes. Il peut notamment s'agir de traitements de blanchiment, d'élimination des contaminants, de raffinage...

Afin de remédier à cette problématique, ont été mis au point des procédés intégrant une étape de fractionnement qui consiste principalement soit à séparer les éléments fins des éléments plus grossiers par fractionnement selon la taille, soit à séparer les éléments à forte surface spécifique (éléments liants) de ceux à faible surface spécifique (éléments peu liants). Les fractions résultantes peuvent donc être traitées spécifiquement, avant d'être re-mélangées pour former la feuille de papier. Ce fractionnement de la pâte permet ainsi de réduire la consommation énergétique et éventuellement d'améliorer les propriétés du papier.

Toutefois, le fractionnement de la pâte dépend de la nature du procédé de fabrication du support fibreux et notamment de la nature de la pâte à papier.

Par exemple, le fractionnement constitué d'une étape de classage à fentes ou à gros trous est particulièrement adapté aux pâtes à papier obtenues à partir de procédés utilisés pour fabriquer les pâtes mécaniques.

En revanche, lorsque la pâte à papier est issue du recyclage, le fractionnement peut être réalisé par classage à fentes fines. Il permet ainsi de séparer les fibres longues et les fibres plus courtes. Ce type de fractionnement est particulièrement utilisé dans les procédés de fabrication de pâte recyclée pour le papier ondulé. Il est également adapté au traitement de la pâte recyclée et désencrée, telle que celle généralement mise en oeuvre dans la fabrication de journaux et magazines.

Une fois traitée, la pâte peut ensuite être utilisée dans un procédé classique de fabrication du papier ou du carton pouvant comprendre plusieurs couches.

En ce qui concerne les supports stratifiés, papiers ou cartons, il s'agit notamment de cartons plats multi couches (type emballage alimentaire ou boite de médicaments), mais également de papiers pour ondulés, ainsi que de nombreux papiers « tissue ».

Leur procédé de fabrication par stratification consiste essentiellement à positionner plusieurs pâtes à papier en surface ou à l'intérieur des papiers stratifiés.

A cet égard, des machines à papier équipées de caisses de tête dites multi-jets sont généralement utilisées. Dans ce cas, chaque jet alimente une partie de la caisse de tête de façon à localiser précisément chaque pâte. C'est généralement le cas lors de la fabrication de carton pour ondulé et de papier « tissue ».

Leur fabrication peut également être réalisée par préparation de plusieurs feuilles de papier à partir de plusieurs pâtes à papier, le plus souvent pour les cartons plats. Ces feuilles sont ensuite superposées et associées à l'état humide.

Quel que soit le mode de réalisation et le type de support multicouche, la répartition des couches est essentielle pour conférer les propriétés souhaitées au support. Par exemples pour les applications de type papier « tissue », une couche de fibres conférant de la douceur est généralement positionnée en surface sur le recto, alors qu'une une couche de fibres donnant de la résistance est positionnée à l'intérieur du papier.

Toutefois, ces procédés présentent des inconvénients concernant notamment le mélange des couches à la sortie de la caisse de tête (caisse de tête multi-jet), ce qui peut conduire à réduire les avantages liés à la stratification.

Les solutions développées consistent notamment à insérer entre chaque jet des lames flexibles associées à un filet d'eau.

Néanmoins, les procédés de l'art antérieur ne permettent pas de fabriquer un support fibreux comprenant plusieurs couches distinctes formées à partir d'une seule pâte cellulosique fractionnées en différents types de fibres et de fines, tout en optimisant le procédé par traitement spécifique des différentes fractions de la pâte à papier.

Le problème technique que résout la présente invention concerne la séparation des différents types de fibres et des différents types de fines, ainsi que le contrôle de leur répartition dans les couches constitutives d'un support fibreux multicouche.

En outre, les traitements spécifiques adaptés à chaque fraction permettent d'une part de réduire le coût de traitement global, et d'autre part d'effectuer des traitements adaptés à chaque fraction.

### EXPOSE DE L'INVENTION

Dans les procédés de fabrication de papier, la pâte à papier est tout d'abord mise en suspension, avant d'être déposée sur une toile tournant en continu afin de former une feuille. La feuille est ensuite séchée. Une feuille multicouche peut être réalisée par dépôts successifs sur la toile, de suspensions fibreuses pouvant être différentes, en utilisant soit différentes tables de formation puis mariage des feuilles avant pressage, soit une caisse de tête multi-jets.

Du papier stratifié peut également être fabriqué par mise en oeuvre de la technique de formation par mousse. Cette technique a notamment pour avantage de nécessiter des quantités d'eau moins importantes et ainsi de favoriser l'évacuation de l'eau. Elle est avantageusement mise en oeuvre au moyen d'une caisse de tête stratifiée. En outre, elle permet également de donner de la main au papier et assure une bonne formation de la feuille de papier en bloquant la floculation des fibres (Voir notamment J. Poranen 20-11-2012 : « Resource efficiency with foam forming », FIBIC's EffFiber & EffNet seminar).

Le Demandeur a mis au point un procédé de fabrication du papier ou du carton dans lequel les fibres et les fines généralement contenues dans la suspension fibreuse, ou pâte à papier, sont séparées par fractionnement de fibres et de fines (par classage) suivi d'un fractionnement hydrocyclone (par différence de surface spécifique) pour donner quatre fractions différentes (deux types de fibres et deux types de fines) qui peuvent être traitées en mélange entre les deux fractionnements ou de manière indépendante après le deuxième fractionnement.

Chacune des fractions ainsi obtenues peut être utilisée pour former, seule ou en combinaison avec au moins une autre fraction, une couche spécifique du papier ou carton. Par exemple, les différentes fractions peuvent être introduites dans chaque jet d'une caisse de tête multi jet.

Par « pâte à papier », ou « suspension fibreuse », on entend la pâte mise en oeuvre dans la fabrication du papier ou du carton. Elle est généralement à base de cellulose. Elle peut être issue du recyclage.

En outre, les expressions « papier multicouche » et « support fibreux multicouche » désignent invariablement du papier ou du carton comprenant plusieurs couches. Ce support fibreux multicouche est un support stratifié.

La présente invention consiste à combiner sur tout type de pâtes à papier, une étape de fractionnement afin de pouvoir traiter séparément les fractions résultantes, puis une étape de stratification des différentes fractions afin de former un support fibreux (papier ou carton) multicouche. Le positionnement de chacune des fractions dans l'épaisseur du support fibreux permet d'optimiser les propriétés telles que la rugosité de surface, la main (rapport épaisseur/grammage) et la rigidité, la résistance mécanique, la porosité, les propriétés optiques, et la propreté notamment.

Plus précisément, l'objet de la présente invention concerne un procédé de fabrication d'un support fibreux multicouche, comprenant les étapes suivantes :
- mise en suspension d'une pâte à papier comprenant des fibres et des fines, de manière à former une suspension fibreuse ;
- fractionnement de la suspension fibreuse en une première fraction comprenant les fibres et une deuxième fraction comprenant les fines ;
- fractionnement de la fraction de fibres en une fraction de fibres liantes et en une fraction de fibres grossières;
- fractionnement de la fraction de fines en une fraction de fines liantes et en une fraction de fines grossières ;
- formation d'un support fibreux multicouche par stratification des fractions secondaires et/ou de leurs mélanges.

Ce procédé est mis en oeuvre sur une machine à papier conventionnelle, présentant avantageusement une caisse de tête multi-jets ou plusieurs unités de formation avant mariage des feuilles humides. La mise en oeuvre de technologies de formation ou d'enduction par mousse est également possible (voir notamment J. Poranen 20-11-2012 : « Resource efficiency with foam forming », FIBIC's EffFiber & EffNet seminar).

### Fibres/fines

De manière générale, la pâte à papier, ou suspension fibreuse, comprend des fibres et des fines. Les fibres comprennent des fibres dites « liantes » et des fibres dites « grossières ». De la même manière, les fines comprennent des fines liantes et des fines grossières.

La distinction entre les entités liantes ou grossières réside dans leur surface spécifique. Les fibres grossières concernent les fibres à forte épaisseur de paroi alors que les fibres liantes présentent une faible épaisseur de paroi. S'agissant des fines, les fines liantes présentent une surface spécifique supérieure à celle des fines grossières.

De manière générale, les fibres sont caractérisées par leur diamètre, ou épaisseur, et leur longueur. Elles présentent un diamètre avantageusement compris entre 10 et 100 micromètres, et une longueur avantageusement comprise entre 0,5 et 10 millimètres. Le rapport diamètre/longueur des fibres est généralement supérieur à 1/50.

Les fibres liantes sont caractérisées par leur épaisseur de paroi un peu plus faible leur conférant plus de flexibilité et ainsi plus de possibilités de liaison. Les fibres grossières, aux parois plus épaisses, apportent moins de liaisons entre fibres mais plus de rigidité.

De manière générale, les fibres liantes, plus souples, en raison de leur plus faible épaisseur de paroi, correspondent aux fibres de printemps. En revanche, les fibres grossières, plus rigides et à plus forte épaisseur de paroi, correspondent généralement aux fibres d'automne.

La quantité de fibres liantes n'est pas uniquement dépendante de la proportion entre les fibres de printemps et les fibres d'automne. Elle varie également, le cas échéant, en fonction du degré de raffinage des fibres. En effet, le raffinage provoque l'hydratation de la paroi des fibres et la fibrillation de surface, ce qui contribue à les rendre plus souples.

En revanche, les fines présentent des dimensions inférieures, avantageusement nanométriques. Leur longueur est inférieure à 600 micromètres environ. Les fines liantes sont plutôt fibrillaires avec des diamètres de l'ordre du micromètre, et des longueurs jusqu'à 500 micromètres alors que les fines grossières sont plutôt rectangulaires avec des largeurs de quelques dizaines de micromètres et des longueurs d'environ une centaine de micromètres.

De manière générale, les fines liantes contribuent aux propriétés mécaniques alors que les fines grossières contribuent surtout aux propriétés optiques. Les fines liantes peuvent également contenir des éléments de dimensions nanométriques tels que les nano-fibrilles de cellulose.

La publication de Luukko, K., and Paulapuro, H. (1999). "Mechanical pulp fines: Effect of particle size and shape." Tappi journal, 82(2), 95-101 décrit les caractéristiques des fines liantes et grossières.

La publication Vomhoff H., Grundstrom K-J., (2002): 'Fractionation and separate refining of a bleached softwood pulp', STFI report PUB 6, Stockholm, Sweden, 23pp décrit les caractéristiques des fibres liantes et grossières.

### Fractionnement

Dans le procédé - objet de l'invention, la suspension fibreuse est fractionnée de manière à obtenir deux fractions principales qui sont à leur tour fractionnées en quatre fractions secondaires distinctes de fibres et de fines.

Le fractionnement mis en oeuvre dans le cadre de la présente invention n'est pas comparable aux opérations d'épuration lors de la préparation de la pâte à papier. L'épuration de la pâte à papier peut comprendre les étapes suivantes qui permettent d'éliminer les contaminants :
- classage : séparation des contaminants grossiers (film plastique, buchette, papiers résistants à l'état humide, films de colle hot melt...) ;
- cyclonage : séparation des contaminants de densité différente de celles des éléments constitutifs de la pâte (sable, morceaux de verre, agrafes, morceaux de polystyrène...).

Lorsque le classage et le cyclonage sont utilisés en tant qu'épurateurs de la pâte, ils présentent un faible taux de rejets pour limiter les pertes en pâte, étant donné que leur seul objectif est d'obtenir une pâte propre exempte de contaminants.

En revanche, dans la présente invention, ils sont utilisés en tant que fractionateurs. Leurs taux de rejet peuvent alors varier entre 30 et 60 % en volume. Ainsi, ils permettent de séparer la pâte en différentes fractions aux propriétés bien différentes.

Comme déjà indiqué, le fractionnement par classage est alors basé sur les différences de taille des éléments de la suspension, alors que le fractionnement par hydrocyclone est basé sur les différences de surface spécifique des constituants de la suspension fibreuse.

Dans le procédé - objet de l'invention, l'étape de premier fractionnement permet d'obtenir deux fractions principales pouvant être :
- une première fraction comprenant un mélange de fibres grossières et de fibres liantes et une deuxième fraction comprenant un mélange de fines grossières et de fines liantes ; ou
- une première fraction comprenant un mélange de fibres grossières et de fines grossières et une deuxième fraction comprenant un mélange de fibres liantes et de fines liantes.

Ainsi, ce premier fractionnement permet soit de séparer les fibres des fines, soit de séparer les entités liantes des entités grossières.

Les deux fractions principales ainsi obtenues sont ensuite soumises à une deuxième étape de fractionnement.

La séparation des fibres et des fines peut être réalisée par classage à micro trous, lavage, ou par classage à fentes fines, de préférence par classage à micro trous ou par lavage. Elle est encore plus avantageusement mise en oeuvre par classage à micro-trous, de diamètre inférieur à 1 millimètre, préférentiellement inférieur à 500 micromètres, voire idéalement inférieur à 250 micromètres. En outre, ce diamètre de classage à micro-trous peut être avantageusement supérieur à 100 micromètres.

La séparation des entités liantes et des entités grossières peut être avantageusement mise en oeuvre par hydrocyclone. De manière générale, le fractionnement par hydrocyclone permet d'effectuer un fractionnement selon la surface spécifique des fibres et des fines.

L'ordre de fractionnement est préférentiellement de réaliser d'abord la séparation par classage puis par hydrocyclone mais l'inverse est également possible.

La gestion des éléments fins peut ensuite nécessiter de re-mélanger éléments liants et éléments grossiers ensemble avant épaississage.

Selon un mode de réalisation préféré, le premier fractionnement consiste à séparer les fibres et les fines afin d'obtenir une première fraction de fibres grossières et de fibres liantes et une deuxième fraction de fines grossières et de fines liantes.

Lorsque le premier fractionnement, avantageusement par classage à micro-trous, permet de séparer les fibres de tous les éléments fins de la pâte, le fractionnement ultérieur, avantageusement par hydrocyclone, permet de séparer les éléments liants des éléments dits grossiers. Le deuxième fractionnement a ainsi pour but de séparer :
- les fibres liantes et les fibres grossières contenues dans la fraction principale de fibres ; et
- les fines liantes et les fines grossières contenues dans la fraction principale de fines.

En revanche, lorsque le premier fractionnement, avantageusement par hydrocyclone, permet de séparer les éléments liants des éléments grossiers, le fractionnement ultérieur, avantageusement par classage à micro trous, permet de séparer les fibres des fines. Le deuxième fractionnement a ainsi pour but de séparer :
- les fibres liantes et les fines liantes contenues dans l'une des deux fractions principales ; et
- les fibres grossières et les fines grossières contenues dans la deuxième fraction principale.

Ainsi, les quatre fractions secondaires suivantes sont obtenues :
- fibres grossières, F2 ;
- fibres liantes, F1 ;
- fines grossières, f2 ;
- fines liantes, f1.

De manière générale, le fractionnement par classage à micro trous ou par lavage, permet de séparer les fibres (F1, F2) des fines (f1, f2) alors que le fractionnement par hydrocyclone permet de séparer les fibres et fines grossières (F2, f2) des fibres et fines liantes (F1, f1).

Il est également envisageable de ne re-fractionner qu'une seule des deux fractions principales de fibres et/ou de fines. Trois fractions sont alors obtenues.

C'est notamment le cas lorsque le procédé - objet de l'invention, comprend les étapes suivantes :
- mise en suspension d'une pâte à papier comprenant des fibres et des fines, de manière à former une suspension fibreuse ;
- fractionnement de la suspension fibreuse en une première fraction principale de fibres (F1 + F2) et une deuxième fraction principale de fines (f1 + f2) ;
- fractionnement de la fraction principale résultante de fibres par hydrocyclone, de manière à former les deux fractions secondaires suivantes :
   ▪ fraction de fibres liantes (F1) ;
   ▪ fraction de fibres grossières (F2) ;
- formation d'un support fibreux multicouche par stratification de la fraction principale de fines (f1 + f2) et des fractions secondaires de fibres, ou de leurs mélanges.

Ces fractions secondaires peuvent ensuite être re-mélangées afin de préparer un support fibreux dont au moins une des couches comprend un mélanges de fibres et/ou de fines.

### Traitement des fibres et/ou des fines

L'un des avantages que procure le procédé - objet de l'invention, réside dans la possibilité de traiter spécifiquement chacune des fractions, que ce soit avant et/ou après l'étape de deuxième fractionnement. Le traitement des fractions principales et/ou secondaires peut ainsi être adapté en fonction de la nature des fibres et/ou fines.

En effet, la pâte à papier pouvant notamment être issue du recyclage de journaux, de magazines ou autres, les fibres et les fines peuvent nécessiter un traitement tel que le désencrage : l'élimination de l'encre décrochée, concentrée dans la fraction fines, est réalisée par flottation de la fraction fines alors que le décrochage de l'encre encore accrochée sur les fibres et la fragmentation des points noirs sont réalisés par traitement de dispersion sur la fraction de fibres.

Ce traitement est optionnel, notamment lorsque la pâte à papier n'est pas issue du recyclage et qu'il s'agit d'une pâte neuve.

De manière générale, pour une application de désencrage, le traitement des fractions contenant des fibres, qu'elles soient grossières et/ou liantes, comprend au moins une étape choisie dans le groupe comprenant :
- classage à fentes fines ;
- lavage ;
- épaississage ;
- dispersion des contaminants ;
- blanchiment ;
- épuration par cyclonage (en tant qu'épurateur et pas en tant que fractionateur).
- raffinage.

Il est à noter que l'hydrocyclone avec un faible taux de refus fonctionne comme un épurateur, permettant ainsi d'éliminer les contaminants de forte densité, alors qu'un hydrocyclone avec un taux de refus beaucoup plus important (environ 50 %) fonctionne comme un fractionateur (c'est-à-dire comme le fractionateur mis en oeuvre dans l'étape de fractionnement).

Le traitement des fractions contenant des fines grossières et/ou liantes peut comprendre au moins l'une des étapes suivantes :
- flottation ;
- blanchiment ;
- épuration par cyclonage (en tant qu'épurateur et pas en tant que fractionateur).

Au contraire des procédés de désencrage de l'art antérieur, le procédé - objet de l'invention est basé sur le fractionnement, permettant ainsi d'améliorer le rendement en fibres, d'avoir des traitements adaptés pour l'élimination des contaminants (stickies, points noirs, encre...), de réduire l'énergie appliquée à la pâte lors du traitement de dispersion, étant donné qu'il peut être réalisé uniquement sur la fraction de fibres. En outre, il permet de mettre en oeuvre des traitements de blanchiment adaptés à chaque fraction, ce qui permet de réduire les coûts liés à ces étapes de blanchiment. Il peut permettre également de préparer adéquatement les différentes fractions à introduire dans la caisse de tête multi-jets ou les différentes caisses de tête pour fabriquer le papier stratifié.

Selon un mode de réalisation particulier de l'invention, chaque fraction peut comprendre des additifs supplémentaires, tels que par exemples des agents liants, des charges minérales, des fibres synthétiques, ou des micro / nano-fibrilles de cellulose. Les connaissances de l'homme du métier lui permettront de sélectionner les additifs adéquats en fonction de l'application envisagée. Selon la fraction de fibres ou de fines, la nature et la quantité des additifs pourra être adaptée.

Selon un autre mode de réalisation particulier de l'invention, les fractions de fibres et de fines peuvent être re-mélangées avant ou après traitement. Ainsi, il est possible de recombiner les fractions de fibres grossières et de fines grossières afin de former un support fibreux comprenant une couche à base d'un mélange de fibres grossières et de fines grossières. Il en est de même pour toute sorte de combinaison des quatre fractions de fibres et de fines liantes et grossières. Le support fibreux multicouche peut ainsi comprendre au moins une couche à base d'au moins deux fractions de fibres liantes et/ou grossières et/ou de fines liantes et/ou grossières.

### Support fibreux multicouche

Le support fibreux multicouche obtenu selon le procédé décrit ci-avant est un papier multicouche ou un carton multicouche. Il comprend au moins deux couches à base de fibres et/ou fines.

En outre, le support fibreux multicouche peut comprendre des couches successives identiques ou distinctes.

Comme déjà indiqué, chacune des couches du support fibreux multicouche peut être une couche à base de fines et/ou de fibres. L'homme du métier saura ajuster la nature des couches en fonction de l'application visée.

Le support fibreux multicouche peut ainsi comprendre au moins une couche à base d'au moins une des fractions suivantes :
- fibres liantes ;
- fibres grossières ;
- fines liantes ;
- fines grossières.

En effet, les quatre fractions peuvent être introduites différemment selon les propriétés recherchées pour le support fibreux. Par exemple, les combinaisons suivantes peuvent être mises en oeuvre :
- formation d'une couche interne à base de fibres grossières et rigides, sans les mélanger avec les fines, de manière à améliorer la main (rapport épaisseur/grammage) et la rigidité du papier tout en réduisant éventuellement le grammage du support ;
- formation d'une couche interne à base de fines liantes et éventuellement de fibres liantes afin d'améliorer la résistance à la délamination ;
- formation d'au moins une couche externe à base de fines liantes, de préférence dépourvue de fibres, afin de rendre l'état de surface du support fibreux le plus lisse possible ;
- formation d'une couche interne à base de fibres grossières, recouverte de part et d'autre et successivement d'une couche à base de fibres liantes, d'une couche à base de fines grossières, et d'une couche à base de fines liantes afin d'améliorer la main et la rugosité de surface. Dans ce cas, la main de chaque couche du support fibreux (avantageusement symétrique) est décroissante, du centre du support vers la surface. Les propriétés obtenues par cette structure sont particulièrement intéressantes, avec une rigidité doublée, une main augmentée de 19 % et une surface beaucoup plus lisse.

Le support fibreux multicouche peut comprendre :
- une couche de fibres liantes ;
- une couche de fibres grossières ;
- une couche de fines liantes et de fines grossières. Cette couche peut également comprendre des fibres liantes.

C'est notamment le cas lorsque le procédé mis en oeuvre comprend une étape de fractionnement de la pâte pour séparer les fibres et les fines, et une étape de fractionnement de la fraction de fibres résultante.

Ainsi, lorsque les fractions ne sont pas re-mélangées entre elles, le support fibreux comprend au moins trois strates (fractionnement de la pâte et fractionnement de la fraction de fibres), ou au moins quatre strates (fractionnement de la pâte et fractionnement des fractions principales de fibres et de fines). Lorsque le support fibreux est symétrique, il peut comprendre au moins 5 strates (avec 3 fractions, fractionnement de la pâte et fractionnement de la fraction de fibres), ou au moins 7 strates (avec 4 fractions, fractionnement de la pâte et fractionnement des fractions principales de fibres et de fines).

L'obtention d'un support fibreux, en sortie de table de formation, présentant un état de surface ayant un meilleur lissé, peut s'avérer particulièrement avantageux en ce que l'intensité du calandrage éventuellement nécessaire pour certains supports fibreux, peut être réduite. Par conséquent, le calandrage pouvant engendrer des pertes de propriétés mécaniques du support fibreux et des pertes de propriétés optiques, le procédé selon l'invention permet ainsi de les préserver par rapport aux supports de l'art antérieur nécessitant une intensité de calandrage plus conséquente.

Le procédé - objet de la présente invention peut être mis en oeuvre pour fabriquer tout type de papier ou de carton multicouche. Il permet d'obtenir des supports fibreux dont les propriétés mécaniques et/ou la main peuvent être améliorées, particulièrement pour les papiers de fort grammage. L'amélioration significative de rigidité peut également permettre de réduire le grammage du papier à propriétés équivalentes ce qui peut entrainer des gains substantiels de matière.

Le support fibreux multicouche présente avantageusement un grammage supérieur à 45g/m², et plus avantageusement supérieur à 70 g/m².

Il peut notamment s'agir de cartons plats, de papiers impression écriture, et éventuellement de papiers dédiés à la fabrication de journaux et de magazines.

Les supports fibreux présentant une surface très lisse peuvent être particulièrement adaptés à la fabrication de papiers destinés à être lissés ou calandrés c'est-à-dire les papiers super calandrés, les papiers journaux et magazines, ou les papiers non couchés brillant par exemple.

Le positionnement des différentes fractions dans la structure du support fibreux permet ainsi de maintenir ou d'améliorer les propriétés du papier tout en réduisant le coût de fabrication éventuellement tout en réduisant le grammage du support.

Le procédé décrit ci-avant ainsi que l'agencement des différentes fractions dans l'épaisseur du support fibreux peuvent être applicables à la fabrication de panneaux de bois.

L'invention et les avantages qui en découlent ressortiront mieux des figures et exemples suivants donnés afin d'illustrer l'invention et non de manière limitative.

### DESCRIPTION DES FIGURES

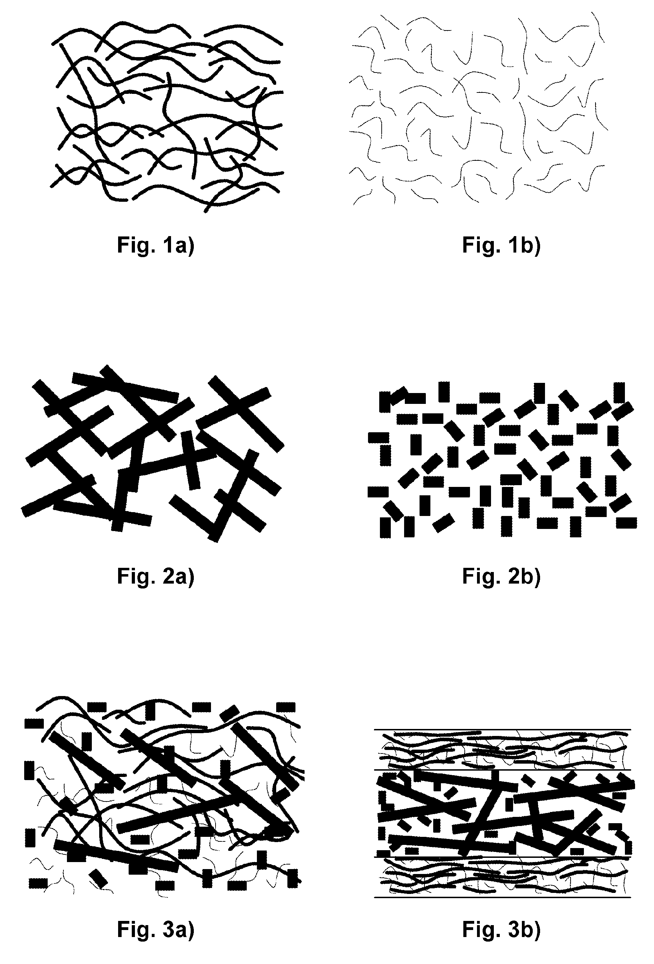

La figure 1a représente des fibres liantes (F1).
La figure 1b représente des fines liantes (F2).
La figure 2a représente des fibres grossières (f1).
La figure 2b représente des fines grossières (f2).
La figure 3a illustre un support fibreux monocouche comprenant un mélange de fibres liantes, de fines liantes, de fibres grossières et de fines grossières.
La figure 3b illustre un support tricouche comprenant une couche interne à base de fibres grossières et de fines grossières, et deux couches externes à base de fibres liantes et de fines liantes.

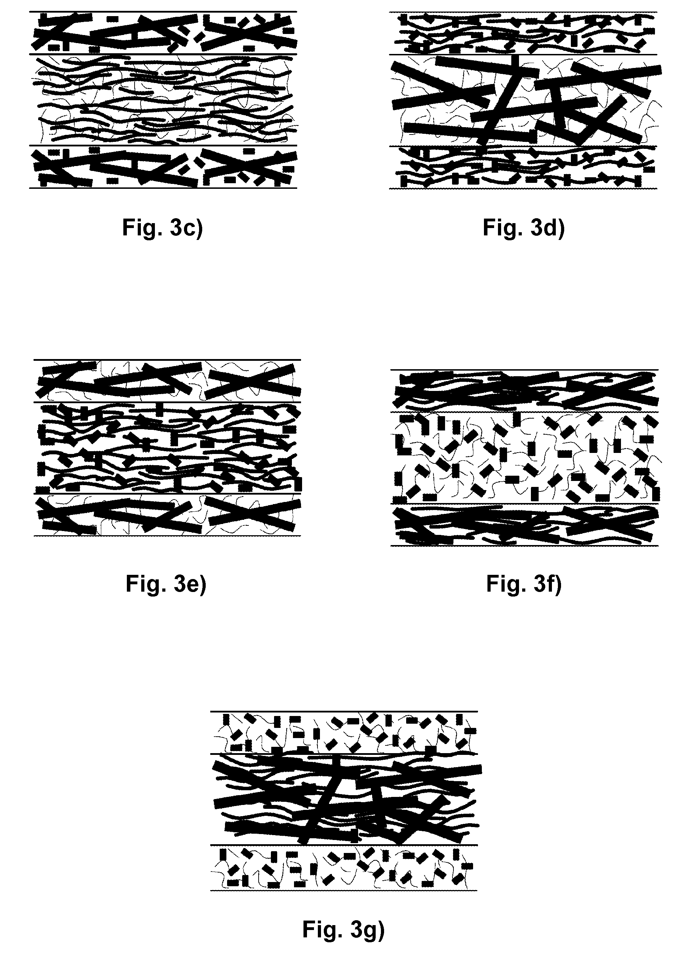

La figure 3c illustre un support tricouche comprenant une couche interne à base de fibres liantes et de fines liantes, et deux couches externes à base de fibres grossières et de fines grossières.
La figure 3d illustre un support tricouche comprenant une couche interne à base de fibres grossières et de fines liantes, et deux couches externes à base de fibres liantes et de fines grossières.
La figure 3e illustre un support tricouche comprenant une couche interne à base de fibres liantes et de fines grossières, et deux couches externes à base de fibres grossières et de fines liantes.
La figure 3f illustre un support tricouche comprenant une couche interne à base de fines liantes et de fines grossières, et deux couches externes à base de fibres liantes et de fibres grossières.
La figure 3g illustre un support tricouche comprenant une couche interne à base de fibres liantes et de fibres grossières, et deux couches externes à base de fines liantes et de fines grossières.
La figure 4a illustre un support fibreux multicouche comprenant successivement une couche majoritairement à base de fibres grossières, une couche majoritairement à base de fibres liantes, une couche majoritairement à base de fines grossières puis au centre une couche majoritairement à base de fines liantes, et de nouveau une couche majoritairement à base de fines grossières, une couche majoritairement à base de fibres liantes, et une couche majoritairement à base de fibres grossières.
La figure 4b illustre un support fibreux multicouche comprenant successivement une couche majoritairement à base de fines liantes et grossières, une couche majoritairement à base de fibres liantes, une couche majoritairement à base de fibres grossières, une couche majoritairement à base de fibres liantes, et une couche majoritairement à base de fines liantes et grossières.
La figure 5 représente les étapes d'un mode de réalisation particulier du procédé objet de l'invention.
La figure 6 illustre l'indice de résistance à la traction de fibres, en fonction de l'épaisseur de paroi des fibres.
La figure 7 illustre l'indice de déchirement de fibres, en fonction de l'épaisseur de paroi des fibres.

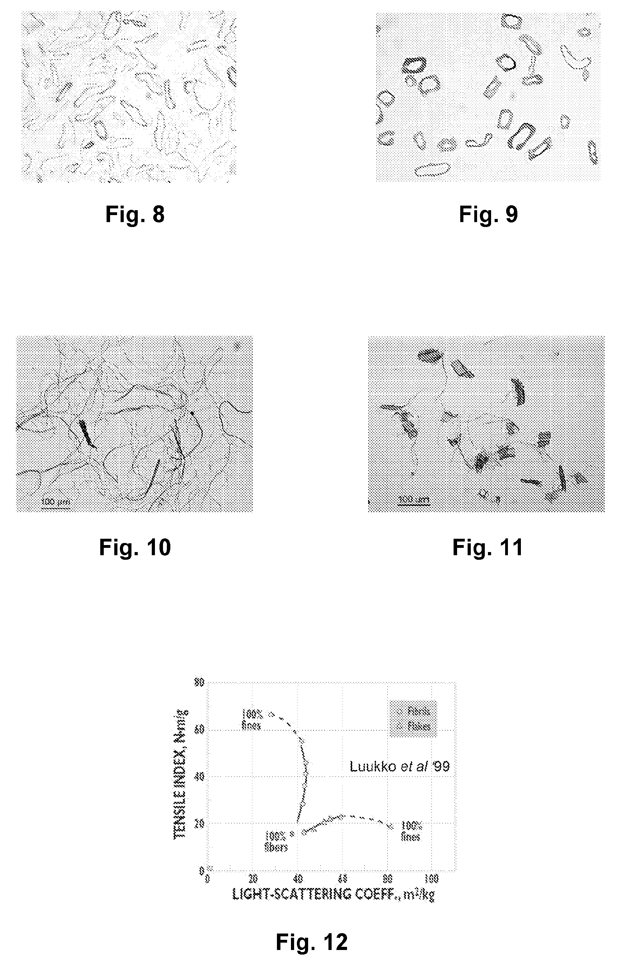

La figure 8 illustre une photographie de fibres liantes correspondant à la fraction résultant d'un procédé par fractionnement par hydrocyclone (fraction acceptée).
La figure 9 illustre une photographie de fibres grossières correspondant à la fraction résultant d'un procédé par fractionnement par hydrocyclone (fraction rejetée).
La figure 10 représente une photographie de fines liantes correspondant à la fraction résultant d'un procédé par fractionnement par hydrocyclone (fraction acceptée).
La figure 11 représente une photographie de fines grossières correspondant à la fraction résultant d'un procédé par fractionnement par hydrocyclone (fraction rejetée).
La figure 12 représente l'indice de résistance à la traction en fonction du coefficient de diffusion pour des fibres (F1 + F2) en mélange avec des fines liantes (f1 - fibrils) ou des fines grossières (f2 - flakes).
La figure 13 représente les étapes d'un mode de réalisation particulier du procédé objet de l'invention.
La figure 14 représente les étapes d'un mode de réalisation particulier du procédé objet de l'invention.
La figure 15a représente un dispositif permettant le fractionnement de la pâte à papier par hydrocyclone.
La figure 15b représente un dispositif permettant le fractionnement de la pâte à papier par classage à micro-trous.
La figure 15c représente un dispositif permettant le fractionnement de la pâte à papier par classage à micro trous, et par hydrocyclone.
La figure 16 représente la rigidité à la flexion en fonction de la rugosité de supports fibreux mono et multicouches obtenus selon l'art antérieur et selon la présente invention.
La figure 17 représente le procédé de fabrication d'un support fibreux multicouches obtenu selon un mode de réalisation particulier de la présente invention.
La figure 18 illustre les propriétés d'un support fibreux mono et multicouches obtenus selon un mode de réalisation particulier de la présente invention par rapport à l'art antérieur.

### DESCRIPTION DETAILLEE DE L'INVENTION

Le procédé objet de la présente invention comprend notamment les deux étapes suivantes :
- fractionnement d'une suspension fibreuse de manière à obtenir deux fractions principales, notamment une fraction de fibres et une fraction de fines ;
- fractionnement des fractions principales de manière à obtenir quatre fractions distinctes de fibres liantes, de fibres grossières, de fines liantes, et de fines grossières ;
- formation d'un support fibreux par stratification de ces fractions.

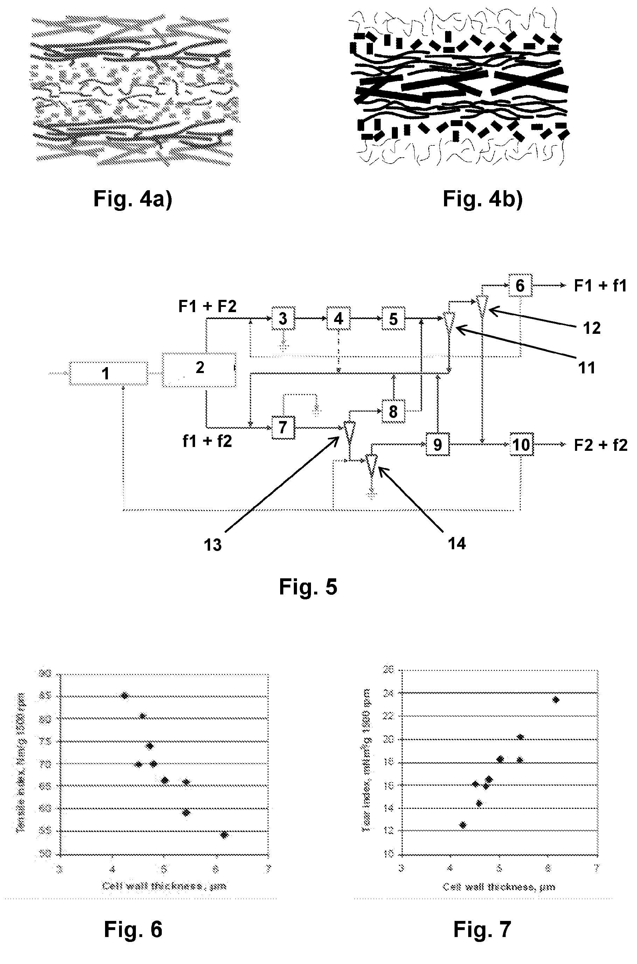

Selon le mode de réalisation particulier illustré par la figure 5, appliqué à un procédé de désencrage, le procédé peut comprendre les étapes suivantes :
- préparation d'une suspension fibreuse (1) ;
- fractionnement (2) de la suspension fibreuse de manière à obtenir une fraction de fibres et une fraction de fines. Cette étape est avantageusement réalisée par classage à micro-trous.

Ensuite, chaque fraction est traitée séparément.

La fraction de fibres est soumise aux étapes suivantes :
- classage à fentes fines (3) de la fraction de fibres ;
- lavage (4) ;
- dispersion avec blanchiment (5) ;
- épuration par hydrocyclone (11) de manière à séparer les contaminants, dont les points noirs, par différence de densité, envoyés dans la ligne de traitement des éléments fins ;
- fractionnement par hydrocyclone (12) de manière à séparer les fibres liantes (F1) et les fibres grossières (F2) ;
- épaississage (6) de la suspension de fibres liantes et de fines liantes.

En parallèle, la fraction de fines est soumise aux étapes suivantes :
- flottation (7) ;
- fractionnement par hydrocyclone (13) de manière à séparer les fines liantes (f1) et les fines grossières (f2) ;
- épuration par hydrocyclone des fines grossières (14) ;
- deuxième étape de flottation sur les fines liantes concentrées en encre (8) et les fines grossières (9) ;
- épaississage (10) de la suspension de fines grossières et de fibres grossières.

Ce mode de réalisation particulier permet de combiner d'une part les fibres liantes (F1) et les fines liantes (f1), et d'autre part les fibres grossières (F2) et les fines grossières (f2).

En effet, lors du traitement de la fraction de fibres, après l'étape de fractionnement par hydrocyclone (12) les fibres grossières sont redirigées vers la suspension de fines grossières après la deuxième étape de flottation (9).

En ce qui concerne la séparation des fines liantes et grossières par fractionnement par hydrocyclone (13), les fines liantes sont redirigées vers la suspension de fibres, en amont de l'épuration par hydrocyclone (11).

Ce mode de réalisation particulier peut ainsi permettre de fabriquer un support fibreux multicouche comprenant au moins une couche à base de fibres liante et de fines liantes, et au moins une couche à base de fibres grossières et de fines grossières.

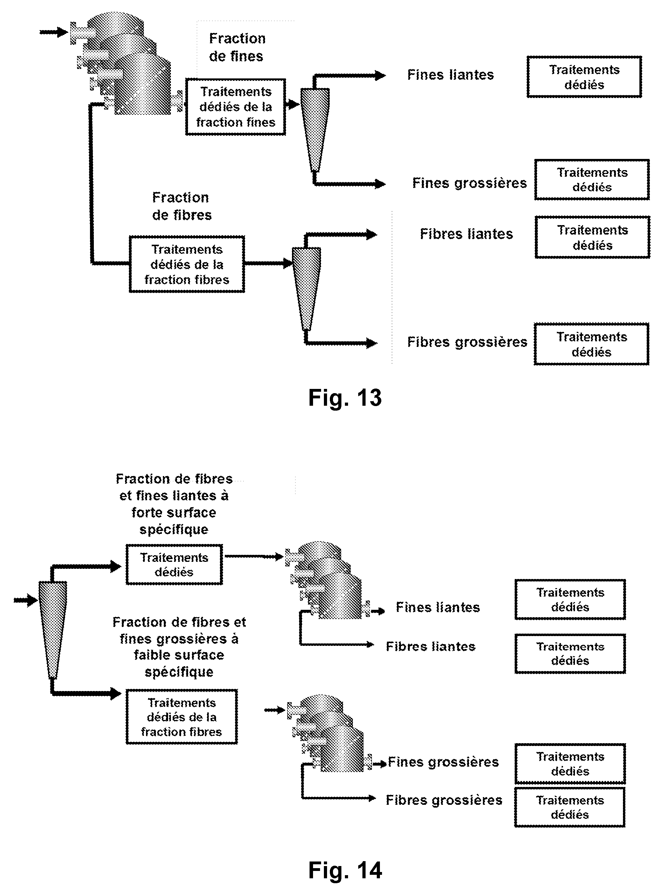

Le mode de réalisation particulier représenté par la figure 13 concerne un procédé mettant en oeuvre un premier fractionnement de la suspension fibreuse de manière à obtenir deux fractions principales. La première d'entre elles contient un mélange de fines liantes (f1) et de fines grossières (f2) alors que la deuxième contient un mélange de fibres liantes (F1) et de fibres grossières (F2).

Chaque fraction principale peut être traitée indépendamment, avant d'être fractionnée à nouveau afin de séparer les éléments liants des éléments grossiers. Les quatre fractions résultantes peuvent ensuite être traitées indépendamment.

Le mode de réalisation particulier représenté par la figure 14 concerne un procédé mettant en oeuvre un premier fractionnement de la suspension fibreuse de manière à obtenir deux fractions principales. La première d'entre elles contient un mélange de fines liantes (f1) et de fibres liantes (F1) (éléments à forte surface spécifique) alors que la deuxième contient un mélange de fines grossières (f2) et de fibres grossières (F2) (éléments à faible surface spécifique).

Chaque fraction principale peut être traitée indépendamment, avant d'être fractionnée à nouveau afin de séparer les fines des fibres. Les quatre fractions résultantes peuvent ensuite être traitées indépendamment.

### EXEMPLES DE REALISATION DE L'INVENTION

Le procédé illustré par la figure 5 a été mis en oeuvre dans le cadre du désencrage d'une pâte recyclée issue du repulpage d'un mélange de 75 % de magazines et 25 % de journaux.

Le tableau 1 récapitule les avantages liés à ce mode de réalisation particulier du procédé objet de l'invention par rapport aux procédés de l'art antérieur ne permettant pas de traiter séparément les fibres et les fines.

**Tableau 1 : Désencrage d'une pâte cellulosique par mise en oeuvre de procédés selon l'art antérieur et selon l'invention pâte DIP (deinked pulp)**

| | Art antérieur | Invention (% changement) |
|---|---|---|
| Rendement, % | 70,7 | 76,0 (+7,4) |
| Quantité de papiers récupérés nécessaire, (T/T pâte DIP) | 1,54 | 1,43 (-7,1) |
| Tonnes de boues produites, (T humide/T pâte DIP) | 0,83 | 0,63 (-24) |
| Consommation énergétique, kWh/T | 547 | 438 (-20) |
| Coût en produits chimiques, €/T pâte DIP | 50,7 | 25,2 (-50) |
| Coût de production, (papiers récupérés à 50 €/T) €/T pâte DIP | 179,7 | 137,4 (-23) |

Le procédé - objet de l'invention permet ainsi d'améliorer le rendement de désencrage, tout en diminuant les coûts associés.

Le traitement d'une pâte issue du recyclage d'un mélange de 75 % de magazines et de 25 % de journaux selon le procédé objet de l'invention permet d'isoler et de traiter indépendamment 4 fractions comprenant respectivement les fibres liantes, les fibres grossières, les fines liantes, et les fines grossières. Les propriétés des fibres et des fines sont récapitulées dans le tableau 2.

Le mode de réalisation mis en oeuvre correspond à ceux illustrés par les figures 13 et 14, permettant d'obtenir quatre fractions indépendantes.

**Tableau 2 : Propriétés des 4 fractions de fibres et fines d'une pâte à papier recyclée et désencrée.**

| Repartition après désencrage (rendement de 86 %) et fractionnement | 28% | 28% | 15% | 15% |
|---|---|---|---|---|
| | Fibres liantes F1 | Fibres grossières F2 | Fines liantes f1 | Fines grossières f2 |
| Teneur en cendres, % | 1,4 | 1,7 | 42 | 32,5 |
| Points noirs, mm²/m² | 112 | 2261 | n.d. | n.d. |
| Egouttage CSF, mL | 385 | 516 | 417 | 176 |
| Teneur en éléments fins, % - (obtenu par hyperlavage) | 1 | 4,6 | 90,6 | 80 |
| Longueur de fibres / fines, mm | 1,23 | 1,24 | 0,48 | 0,54 |
| Largeur de fibres, µm | 25,4 | 26,8 | 22 | 24,3 |
| Teneur en encre, ppm | 72 | 102 | 457 | 358 |
| Coefficient de diffusion, m²/kg | 34,8 | 33,9 | 106,0 | 89,0 |
| Coefficient d'absorption, m²/kg | 0,9 | 1,1 | 10,5 | 8,7 |
| Blancheur, % sans UV | 62,3 | 60,2 | 54,3 | 56,8 |

### 1/ Fabrication d'un support tricouche

Plusieurs feuilles de papiers multicouches (stratifiés) ont été préparées selon le procédé objet de la présente invention (exemples 1-6) et comparées à un papier monocouche obtenu selon les techniques de l'art antérieur (AA).
Dans le procédé mis en oeuvre (exemples 1-6), la pâte cellulosique est issue d'un mélange de 75 % de magazines et 25 % de journaux.

Préalablement à la formation du support, la pâte a été traitée par :
- fractionnement afin de séparer les fibres (F1 et F2) des fines (f1 et f2) ;
- deuxième fractionnement, par hydrocyclonage, de chacune des fractions de fibres et de fines ainsi obtenues afin de séparer d'une part les fibres liantes (F1) des fibres grossières (F2), et d'autre part les fines liantes (f1) des fines grossières (f2);
- le cas échéant, traitement des quatre fractions ainsi obtenues.

Les feuilles stratifiées ont été réalisées sur formette dynamique, appareil de laboratoire permettant de réaliser des feuilles multicouches avec une séparation quasi parfaite des couches.

La localisation des différentes fractions dans un papier stratifié permet d'améliorer plusieurs propriétés telles que la main, et les propriétés de surface. Selon la structure, les améliorations des propriétés sont rapportées dans le tableau 4.

**Tableau 3 : Composition des feuilles de papier multicouche obtenues selon l'invention et monocouche selon l'art antérieur.**

| Exemple | | Composition^{(a)} (couches) | Charges^{(b)} (%) | Grammage (g/m²) |
|---|---|---|---|---|
| AA (Figure 3a)) | | 0,25 F1 + 0,25 F2 | 16 | 48 |
| | | + 0,25 f1 + 0,25 f2 | | |
| 1 (Figure 3b)) | couche externe 1 | 0,5 F1 + 0,5 f1 | 22 | 12 |
| | couche interne | 0,5 F2 + 0,5 f2 | 17 | 24 |
| | couche externe 2 | 0,5 F1 + 0,5 f1 | 22 | 12 |
| 2 (Figure 3c)) | couche externe 1 | 0,5 F2 + 0,5 f2 | 17 | 12 |
| | couche interne | 0,5 F1 + 0,5 f1 | 22 | 24 |
| | couche externe 2 | 0,5 F2 + 0,5 f2 | 17 | 12 |
| 3 (Figure 3d)) | couche externe 1 | 0,5 F1 + 0,5 f2 | 17 | 12 |
| | couche interne | 0,5 F2 + 0,5 f1 | 22 | 24 |
| | couche externe 2 | 0,5 F1 + 0,5 f2 | 17 | 12 |
| 4 (Figure 3e)) | couche externe 1 | 0,5 F2 + 0,5 f1 | 22 | 12 |
| | couche interne | 0,5 F1 + 0,5 f2 | 17 | 24 |
| | couche externe 2 | 0,5 F2 + 0,5 f1 | 22 | 12 |
| 5 (Figure 3f)) | couche externe 1 | 0,5 F1 + 0,5 F2 | 2 | 12 |
| | couche interne | 0,5 f1 + 0,5 f2 | 37 | 24 |
| | couche externe 2 | 0,5F1 + 0,5 F2 | 2 | 12 |
| 6 (Figure 3g)) | couche externe 1 | 0,5 f1 + 0,5 f2 | 37 | 12 |
| | couche interne | 0,5 F1 + 0,5 F2 | 2 | 24 |
| | couche externe 2 | 0,5 f1 + 0,5 f2 | 37 | 12 |

| | | | | |
|---|---|---|---|---|
| (a) La quantité de fibres est exprimée en fractions, par rapport au poids sec total des fibres et des fines. F1 = Fibres liantes F2 = Fibres grossières f1 = fines liantes f2 = fines grossières (b) Les charges sont amenées par les papiers récupérés, et sont donc présentes dans les fractions après traitement Le pourcentage de charges est exprimé en poids par rapport au poids sec de la couche. | | | | |

**Tableau 4 : Propriétés des supports multicouche obtenus selon l'invention par rapport à un support monocouche de l'art antérieur.**

| Exemple | AA | 1 | 2 | 3 | 4 | 5 | 6 |
|---|---|---|---|---|---|---|---|
| main (cm³/g) | 1,85 | -3% | 1% | -2% | -2% | 7% | 6% |
| Indice de résistance à la traction MD (N.m/g) | 49,6 | 14% | 17% | 18% | 3% | -13% | -20% |
| Indice de résistance à l'éclatement (kPa.m²/g) | 1,69 | -1% | 1% | 3% | 5% | -11% | -24% |
| Indice de déchirement MD (mN.m²/g) | 4,08 | 0% | -6% | 2% | -3% | -1% | 6% |
| Rigidité à la flexion, MD (mN.m) | 0,114 | 35% | 11% | 29% | 21% | 7% | 26% |
| Perméabilité à l'air (cm³/m².Pa.s) | 0,93 | -26% | 18% | 40% | 3% | -46% | -45% |
| Rugosité de surface, Bentsen (mL/min) | 910 | -12% | 5% | -4% | -1% | 10% | -14% |
| Scott bond (J/m²) | 301 | -27% | 18% | 10% | -13% | -18% | -65% |
| Opacité, with UV % | 96,6 | 0,1% | -0,1% | -0,1% | **-**0**,**2% | -0,5% | 0,1% |
| Blancheur, % | 64 | -1% | -1% | -1% | -1% | 2% | -2% |
| Points noirs (mm²/m²) | 328,9 | -82% | 63% | -60% | 52% | 107% | -79% |

Les valeurs concernant les exemples 1-6 sont exprimées en pourcentage par rapport à la valeur référence du support AA de l'art antérieur.

### 2/ Fabrication d'un support multicouche présentant une main décroissante de la couche interne vers la surface

Un support fibreux multicouche a été préparé selon le procédé de l'invention, par superposition des fractions de fibres et de fines, de manière à conférer une main décroissante de la couche interne du support vers la surface (tableau 5).

**Tableau 5 : Propriétés d'un support fibreux multicouche obtenu selon l'invention par rapport à un support monocouche de l'art antérieur.**

| Support fibreux | Structure monocouche de référence (art antérieur) | Structure multicouche obtenue selon l'invention |
|---|---|---|
| | | f1 + charges |
| | | kraft |
| | | f2 |
| Couches | F1 + F2 + f1 + f2 + kraft + charges | F1 |
| | | F2 |
| | | F1 |
| | | f2 |
| | | kraft |
| | | f1 + charges |
| Grammage, g/m² | 51 | 51 |
| Epaisseur, µm | 105 | 125 |
| Main, cm3/g | 2,06 | 2,45 |
| Rigidité, mN.m | 0,100 | 0,220 |
| Rugosité Bendtsen, mL/min | 970 | 675 |
| Indice de traction, N.m/g | 35 | 35 |
| Indice de déchirement, mN.m²/g | 6,1 | 6,7 |

Le support de l'art antérieur du tableau 5 contient 71 % de pâte mécanique (dont 35 % de Fibres liantes F1, 35 % de Fibres grossières F2, 15 % de fines liantes f1 et 15 % de fines grossières f2), 17 % de pâte chimique kraft et 12 % de charge.

Il est à noter que, à grammage égal, le support obtenu selon l'invention présente une rigidité deux fois plus importante, une main plus importante de 19 %, et une surface beaucoup plus lisse.

Les compositions entre la structure monocouche et la structure multicouche sont identiques, afin de permettre de réaliser la comparaison, et sont les suivantes :
- F1 : 25 %
- F2 : 25 %
- f1 : 11 %
- f2:11%
- Kraft: 17 %
- charges (ajoutées) : 11 %

### 3/ Fabrication d'un support multicouche (E) selon le procédé de l'invention, présentant une main décroissante de la couche interne vers la surface.

Les structures de feuille A-E permettent de mettre en évidence la modification des propriétés des supports en fonction de la mise en oeuvre d'étape(s) de fractionnement ou non.

**Tableau 6 : Support fibreux mono et multicouches.**

| Support A (référence) | B (Fig. 15a) | C (Fig. 15b) | D (Fig. 15b) | E (Fig. 15c) |
|---|---|---|---|---|
| Pas de fractionnement | Fractionnement : Hydrocyclone | Fractionnement : micro trous | Fractionnement : micro trous | Fractionnement : micro trous + Hydrocyclone |
| 1 couche | 3 couches | 3 couches | 3 couches | 9 couches |
| | Kraft + F1 + f1 + charges | Kraft + f1 + f2 + charges | Kraft + F1 + F2 + charges | f1 + charges |
| | | | | Charges |
| | | F1 + F2 | | f2 |
| F1 + F2 + f1 + f2 + Kraft + charges | F2 + f2 | | | F1 |
| | | | f1 + f2 | F2 |
| | | | Kraft + F1 + F2 + charges | F1 |
| | Kraft + F1 + f1 + charges | | | F2 |
| | | Kraft + f1 + f2 + charges | | charges |
| | | | | f1 + charges |

La suspension fibreuse mise en oeuvre pour préparer ces supports comprend (en poids) :
- 71% de pâte mécanique constituée de 35% F1 + 35% F2 + 15% f1 + 15%f2
- 17% de pâte chimique
- 12% de charges minérales (argile)

Ainsi, selon les structures de feuille stratifiées, nécessitant un ou deux fractionnements, des différences de propriétés très significatives sont mises en évidence :

**Tableau 7 : Propriétés des supports fibreux B-E par rapport au support référence A.**

| Support | B | C | D | E |
|---|---|---|---|---|
| Réduction de la rugosité, mL/min | 13% | 11% | -7% | 30% |
| Réduction de Ra, µm | 22% | -2% | -2% | 39% |
| Réduction de Rq, µm | 21% | -1% | 0 | 37% |
| Rigidité à la flexion, mN.m | 11% | 49% | -35%% | 112% |
| main, cm³/g | 2% | 14% | 4% | 18% |
| Indice de déchirement, mN.m²/g | -2% | 5% | -12% | 9% |
| Indice de résistance à l'éclatement, kPa.m²/g | -5% | -13% | -17% | -10% |
| Indice de résistance à la traction, N.m/g | 3% | -5% | -2% | 1% |

Les gains sont exprimés en pourcentages, par rapport à un papier conventionnel (A) en une couche obtenu avec la même composition fibreuse.

Les paramètres Ra et Rq correspondent respectivement à l'écart moyen arithmétique, par rapport à la ligne moyenne de la rugosité, et à la moyenne de l'écart moyen quadratique, par rapport à la ligne moyenne de la rugosité.

La structure de feuille B résultant du fractionnement hydrocyclone permet d'améliorer un peu l'état de surface du papier (13 % de réduction de rugosité), et la rigidité (+11 %) par rapport à un témoin classique A en une seule couche. Cependant, ces améliorations sont assez limitées.

De meilleurs résultats sont obtenus en positionnant les fines en surface et les fibres au milieu du support fibreux (C), dans l'épaisseur de la feuille. Ainsi, la rigidité (+49 %) est nettement améliorée alors que la rugosité est légèrement réduite (11 %).

La combinaison des deux fractionnements micro-trou et hydrocyclone sur les deux fractions principales, et le positionnement judicieux des différentes fractions par main décroissante du centre de la feuille E vers la surface permet d'obtenir des gains bien plus intéressants que les structures de feuille obtenues avec chacun de fractionnements.

En effet, la rigidité est améliorée de 112 %, la rugosité est réduite de 30 %, la main est augmentée de 18 %, et la résistance à la déchirure est améliorée de 9 %.

Ces résultats montrent ainsi l'intérêt de combiner les deux fractionnements, et l'importance du positionnement des fractions dans la structure de la feuille en fonction des propriétés voulues.

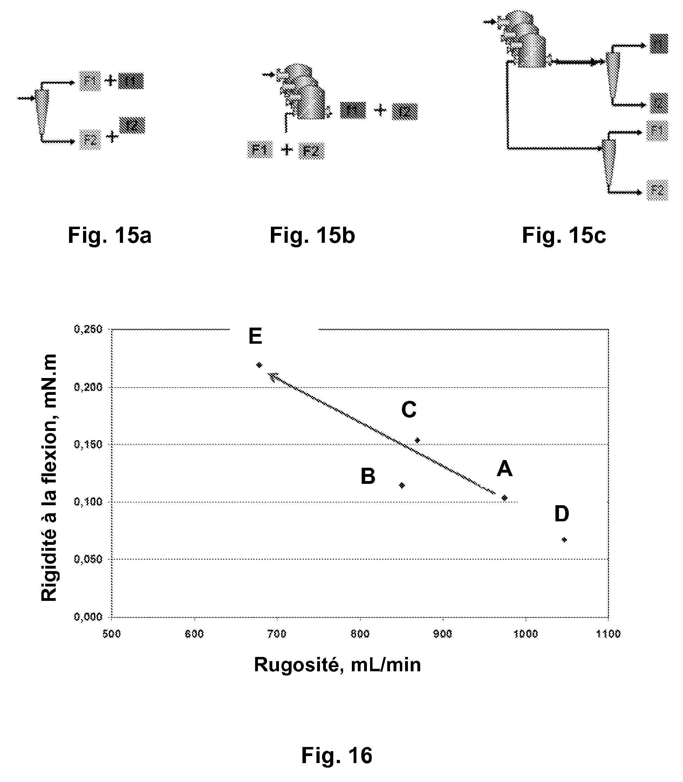

A cet égard, la figure 16 qui représente la rigidité des supports A-E en fonction de la rugosité, montre tout l'intérêt du double fractionnement (micro-trou + hydrocyclone) par rapport à une seule étape de fractionnement ou aucune.

### 4/ Fabrication d'un support fibreux selon le procédé de l'invention, comprenant 5 couches.

Cet exemple correspond à des essais de fractionnement réalisés à l'échelle pilote et à l'utilisation des fractions sur une machine pilote à vitesse élevée (600 m/min).

La pâte à papier utilisée correspond au repulpage d'un support de papier magazine, avec une composition similaire à ce qui a été utilisé dans l'exemple précédent.

Le procédé - objet de l'invention a été mis en oeuvre sur une pâte à papier pour obtenir une fraction F1 de fibres grossières, une fraction F2 de fibres liantes, et une fraction f1 + f2 de fines grossières et liantes.

Le fractionnement de la pâte a été réalisé par 1) classage à micro trous et 2) par hydrocyclone de la fraction de fibres ainsi obtenue.

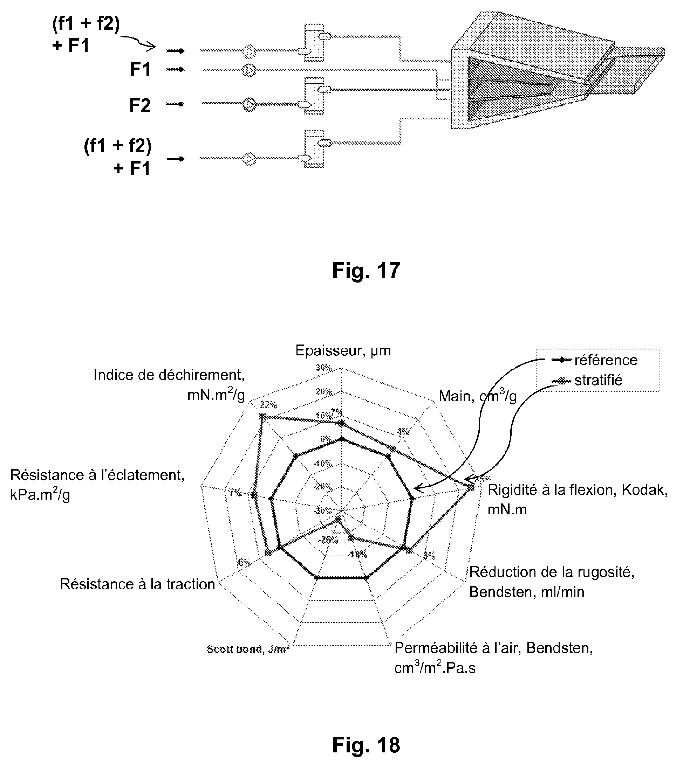

Un support fibreux comprenant les couches suivantes a ensuite été préparé (figure 17) :
- mélange F1 + (f1 + f2) ;
- F1 ;
- F2;
- F1 ;
- mélange F1 + (f1 + f2).

Les propriétés obtenues par cette feuille stratifiée comparativement au papier de référence A sont notamment les suivantes (figure 18) :
- gains significatifs de résistance à la déchirure (+ 22 %), de rigidité (+ 25 %), de résistance à l'éclatement (+ 7 %), et d'épaisseur (+ 7 %) ;
- légère augmentation de la résistance à la traction (+6%) et de la main (+4 %).

En revanche, il est à noter la réduction de la cohésion interne (-26 %) qui reste néanmoins dans la gamme acceptable.

En conclusion, en fonction des propriétés recherchées, l'homme du métier pourra notamment définir le positionnement des différentes fractions ainsi :
- pour améliorer la rigidité et réduire le grammage, et pour améliorer l'aspect lisse de la surface (voir figure 4b) : positionner les fibres rigides dans la couche interne, puis symétriquement les fibres liantes et enfin, de chaque côté, les fines grossières puis liantes en surface (voire le mélange de ces éléments fins selon le nombre de strates qu'il est possible de former). Au cas où la couche d'éléments fins de surface nuirait à l'égouttage de la feuille, cette couche peut alors être déposée en surface sur la feuille humide soit par spray, soit par rideau, ou sous forme de mousse.
- pour améliorer la cohésion interne, la résistance à la compression SCT (Short Span Compression Test), et la résistance au double pli : (figure 4a) positionner les fines liantes dans la couche interne, puis symétriquement les fines grossières et enfin, de chaque côté, les fibres liantes puis grossières en surface (la couche de surface étant à moduler selon l'état de surface à obtenir).

Ces exemples sont donnés à titre indicatif et en aucun cas limitatif

## Revendications

1. Procédé de fabrication d'un support fibreux multicouche, comprenant les étapes suivantes :
- mise en suspension d'une pâte à papier comprenant des fibres et des fines, de manière à former une suspension fibreuse ;
- fractionnement de la suspension fibreuse en une première fraction principale de fibres et une deuxième fraction principale de fines ;
- fractionnement de la fraction principale résultante de fibres par hydrocyclone, de manière à former les deux fractions secondaires suivantes :
▪ fraction de fibres liantes ;
▪ fraction de fibres grossières ;
- formation d'un support fibreux multicouche par stratification de la fraction principale de fines et des fractions secondaires de fibres, ou de leurs mélanges.

2. Procédé de fabrication d'un support fibreux multicouche selon la revendication *1,* ***caractérisé* en ce que** la fraction principale de fines est fractionnée en deux fractions secondaires de fines liantes et de fines grossières, par hydrocyclone, préalablement à la formation du support fibreux multicouche.

3. Procédé de fabrication d'un support fibreux multicouche selon la revendication 1 ou 2, ***caractérisé* en ce que** le fractionnement de la suspension fibreuse est réalisé par classage à micro trous, ou par lavage, ou par classage à fentes fines, avantageusement par classage à micro trous.

4. Procédé de fabrication d'un support fibreux multicouche selon la revendication *3,* ***caractérisé* en ce que** le classage à micro trous est réalisé par classage à micro trous de diamètre inférieur à 1 millimètre.

5. Procédé de fabrication d'un support fibreux multicouche selon la revendication *3,* ***caractérisé* en ce que** le classage à micro trous est réalisé par classage à micro trous de diamètre inférieur à 500 micromètres.

6. Procédé de fabrication d'un support fibreux multicouche selon l'une des revendications 1 à 5, ***caractérisé* en ce qu'**il comprend en outre au moins une étape de traitement de chacune des fractions principales et/ou secondaires.

7. Procédé de fabrication d'un support fibreux multicouche selon la revendication *6,* ***caractérisé* en ce que** le traitement des fractions contenant des fibres comprend au moins une étape choisie dans le groupe comprenant :
- classage à fentes fines ;
- lavage ;
- épaississage ;
- dispersion des contaminants ;
- blanchiment ;
- épuration par cyclonage ;
- raffinage.

8. Procédé de fabrication d'un support fibreux multicouche selon la revendication ***6, caractérisé* en ce que** le traitement des fractions contenant des fines comprend au moins une étape choisie dans le groupe comprenant flottation, épuration par cyclonage, et blanchiment.

9. Procédé de fabrication d'un support fibreux multicouche selon la revendication *1,* ***caractérisé* en ce qu'**il comprend les étapes suivantes :
- mise en suspension d'une pâte à papier comprenant des fibres et des fines, de manière à former une suspension fibreuse ;
- fractionnement par classage à micro trous de la suspension fibreuse en une première fraction principale de fibres et une deuxième fraction principale de fines ;
- fractionnement par hydrocyclone de chacune des fractions principales en quatre fractions secondaires ;
- formation d'un support fibreux multicouche par stratification des fractions secondaires ou de leurs mélanges.

10. Procédé de fabrication d'un support fibreux multicouche selon l'une des revendications 2 à 9, ***caractérisé* en ce qu'**il comprend la formation d'une couche interne à base de fibres grossières et rigides, sans les mélanger avec les fines.

11. Procédé de fabrication d'un support fibreux multicouche selon la revendication 10, ***caractérisé* en ce qu'**il comprend la formation d'au moins une couche externe à base de fines liantes.

12. Procédé de fabrication d'un support fibreux multicouche selon la revendication 11, ***caractérisé* en ce que** la couche externe à base de fines liantes est dépourvue de fibres.

13. Procédé de fabrication d'un support fibreux multicouche selon l'une des revendications 2 à 9, ***caractérisé* en ce qu'**il comprend la formation d'une couche interne à base de fibres grossières, recouverte de part et d'autre et successivement d'une couche à base de fibres liantes, d'une couche à base de fines grossières, et d'une couche à base de fines liantes.

14. Procédé de fabrication d'un support fibreux multicouche selon l'une des revendications 2 à 9, ***caractérisé* en ce qu'**il comprend la formation d'une couche interne à base de fines liantes et éventuellement de fibres Hantes.

## Patentansprüche

1. Verfahren zur Herstellung eines mehrschichtigen, faserigen Trägermaterials, das die folgenden Schritte umfasst:
- Herstellung eines Papierbreis mit Fasern und Feinstoffen, sodass eine faserhaltige Suspension entsteht;
- Fraktionierung der faserhaltigen Suspension in einen ersten Hauptbestandteil aus Fasern und einen zweiten Hauptbestandteil aus Feinstoffen;
- Fraktionierung des Hauptbestandteils aus Fasern im Hydrozyklon, so dass sich die beiden folgenden sekundären Bestandteile ergeben:
• Bestandteil aus Bindefasern;
• Bestandteil aus groben Fasern;
- Bildung eines mehrschichtigen, faserigen Trägermaterials durch Schichtung des Hauptbestandteils aus Feinstoffen und der sekundären Bestandteile aus Fasern, oder Mischungen daraus.

2. Verfahren zur Herstellung eines mehrschichtigen, faserigen Trägermaterials gemäß Anspruch 1, ***dadurch gekennzeichnet*, *dass*** der Hauptbestandteil aus Feinstoffen im Hydrozyklon in zwei sekundäre Bestandteile aus Bindefasern und groben Feinstoffen fraktioniert wird, bevor das mehrschichtige, faserige Trägermaterial gebildet wird.

3. Verfahren zur Herstellung eines mehrschichtigen, faserigen Trägermaterials gemäß Anspruch 1 oder 2, Anspruch 1, ***dadurch gekennzeichnet*, *dass*** die Fraktionierung der faserhaltigen Suspension durch Sortierung mit Mikrolöchern oder durch Waschen, oder durch Sortierung mit kleinen Schlitzen, vorteilhafterweise durch Sortierung mit Mikrolöchern erfolgt.

4. Verfahren zur Herstellung eines mehrschichtigen, faserigen Trägermaterials gemäß Anspruch 3, ***dadurch gekennzeichnet*, *dass*** die Sortierung mit Mikrolöchern durch eine Sortierung mit Mikrolöchern mit einem Durchmesser von weniger als 1 Millimeter erfolgt.

5. Verfahren zur Herstellung eines mehrschichtigen, faserigen Trägermaterials gemäß Anspruch 3, ***dadurch gekennzeichnet*, *dass*** die Sortierung mit Mikrolöchern durch eine Sortierung mit Mikrolöchern mit einem Durchmesser von weniger als 500 Mikrometern erfolgt.

6. Verfahren zur Herstellung eines mehrschichtigen, faserigen Trägermaterials gemäß einem der Ansprüche 1 bis 5, ***dadurch gekennzeichnet*, *dass*** es außerdem mindestens eine Stufe zur Behandlung jeder der Haupt-/ und/oder Nebenbestandteile umfasst.

7. Verfahren zur Herstellung eines mehrschichtigen, faserigen Trägermaterials gemäß Anspruch 6, ***dadurch gekennzeichnet, dass*** die Behandlung der faserhaltigen Bestandteile mindestens einen Schritt umfasst, der zu der folgenden Gruppe gehört:
- Sortierung mit feinen Schlitzen;
- Waschen;
- Eindickung;
- Dispergieren der Verunreinigungen:
- Bleichen;
- Reinigen durch Zyklonieren;
- Raffinieren.

8. Verfahren zur Herstellung eines mehrschichtigen, faserigen Trägermaterials gemäß Anspruch 6, ***dadurch gekennzeichnet, dass*** die Behandlung der feinstoffhaltigen Bestandteile mindestens einen Schritt umfasst, der zu der Gruppe Flotation, Reinigen durch Zyklonieren und Bleichen gehört.

9. Verfahren zur Herstellung eines mehrschichtigen, faserigen Trägermaterials gemäß Anspruch 6, ***dadurch gekennzeichnet, dass*** es die folgenden Schritte umfasst:
- Herstellung eines Papierbreis mit Fasern und Feinstoffen, so dass eine faserhaltige Suspension entsteht;
- Fraktionierung der faserhaltigen Suspension durch Sortierung mit Mikrolöchern in einen ersten Hauptbestandteil aus Fasern und einen zweiten Hauptbestandteil aus Feinstoffen;
- Fraktionierung im Hydrozyklon jedes Hauptbestandteils in vier sekundäre Bestandteile;
- Bildung eines mehrschichtigen, faserigen Trägermaterials durch Schichtung der sekundären Bestandteile oder ihrer Mischungen.

10. Verfahren zur Herstellung eines mehrschichtigen, faserigen Trägermaterials gemäß einem der Ansprüche 2 bis 9, ***dadurch gekennzeichnet, dass*** es die Bildung einer inneren Schicht auf Basis grober, steifer Fasern, ohne diese mit den Feinstoffen zu vermischen, umfasst.

11. Verfahren zur Herstellung eines mehrschichtigen, faserigen Trägermaterials gemäß Anspruch 10, ***dadurch gekennzeichnet, dass*** es die Bildung mindestens einer Außenschicht auf Basis von bindenden Feinstoffen umfasst.

12. Verfahren zur Herstellung eines mehrschichtigen, faserigen Trägermaterials gemäß Anspruch 11, ***dadurch gekennzeichnet*, *dass*** die Außenschicht auf Basis von bindenden Feinstoffen keine Fasern enthält.

13. Verfahren zur Herstellung eines mehrschichtigen, faserigen Trägermaterials gemäß einem der Ansprüche 2 bis 9, ***dadurch gekennzeichnet, dass*** es die Bildung einer inneren Schicht auf Basis grober Fasern umfasst, die auf beiden Seiten und nacheinander jeweils von einer Schicht auf Basis von Bindefasern, einer Schicht auf Basis von groben Feinstoffen und einer Schicht auf Basis von bindenden Feinstoffen bedeckt ist.

14. Verfahren zur Herstellung eines mehrschichtigen, faserigen Trägermaterials gemäß einem der Ansprüche 2 bis 9, ***dadurch gekennzeichnet*, *dass*** es die Bildung einer inneren Schicht auf Basis bindender Feinstoffe und eventuell von Bindefasern umfasst.

## Claims

1. Process for production of a multi-layer fibrous medium including the following steps:
- production of suspension of a paper pulp including fibers and fines, so as to form a fibrous suspension;
- fractionation of the fibrous suspension into one first principal fraction of fibers and one second principal fraction of fines;
- fractionation of the resulting principal fraction of fibers via hydrocyclone, so as to produce the following two secondary fractions:
• fraction of binding fibers;
• fraction of rough fibers;
- formation of a multi-layer fibrous medium by lamination of the principal fraction of fines and secondary fractions of fibers, or of their mixtures.

2. Process for production of a multi-layer fibrous medium in accordance with claim 1, ***characterized in that*** the principal fraction of fines is fractioned into two secondary fractions of binding fines and rough fines, by hydrocyclone, prior to the formation of the multi-layer fibrous medium.

3. Process for production of a multi-layer fibrous medium in accordance with claim 1 or 2, ***characterized in that*** the fractionation of the fibrous suspension is achieved through screening with micro-holes, or by washing, or by fine slot screening, advantageously via micro-hole screening.

4. Process for production of a multi-layer fibrous medium in accordance with claim 3, ***characterized in that*** the micro-hole screening is performed via screening with micro-holes of diameter smaller than 1 millimeter.

5. Process for production of a multi-layer fibrous medium in accordance with claim 3, ***characterized in that*** the micro-hole screening is achieved via screening with micro-holes of diameter smaller than 500 micrometers.

6. Process for production of a multi-layer fibrous medium in accordance with one of claims 1 to 5, ***characterized in that*** it also includes at least one step of treatment of each of the principal and/or secondary fractions.

7. Process for production of a multi-layer fibrous medium in accordance with claim 6, ***characterized in that*** the treatment of the fractions containing fibers includes at least one step chosen from the group including:
- screening with fine slots;
- washing;
- thickening;
- dispersal of contaminants;
- bleaching;
- purification through cycloning;
- refining.

8. Process for production of a multi-layer fibrous medium in accordance with claim 6, ***characterized in that*** the treatment of the fractions containing fines includes at least one step chosen from the group including flotation, purification by cycloning, and bleaching.

9. Process for production of a multi-layer fibrous medium in accordance with claim 1, ***characterized in that*** it includes the following steps:
- production of a suspension of a paper pulp containing fibers and fines, so as to produce a fibrous suspension;
- fractionation via micro-hole screening of the fibrous suspension into one first principal fraction of fibers and one second principal fraction of fines;
- fractionation via hydrocycloning of each of the principal fractions into four secondary fractions;
- formation of a multi-layer fibrous medium via lamination of the secondary fractions, or of their mixtures.

10. Process for production of a multi-layer fibrous medium in accordance with one of claims 2 to 9, ***characterized in that*** it includes the formation of an internal layer based on rough and rigid fibers, without mixing them with the fines.

11. Process for production of a multi-layer fibrous medium in accordance with claim 10, **characterized in that** it includes the formation of at least one external layer based on binding fines.

12. Process for production of a multi-layer fibrous medium in accordance with claim 11, ***characterized in that*** the external layer based on binding fines is free of fibers.

13. Process for production of a multi-layers fibrous medium in accordance with one of claims 2 to 9, ***characterized in that*** it includes the formation of an internal layer based on rough fibers, covered on either side and successively with one layer based on binding fibers, one layer based on rough fines and one layer based on binding fines.

14. Process for production of a multi-layer fibrous medium in accordance with one of claims 2 to 9, ***characterized in that*** it includes the formation of an internal layer based on binding fines and possibly binding fibers.
